Europäisches Patentamt

European Patent Office

Office européen des brevets

(19)

(11) Publication number: **0 281 952**
A2

# EUROPEAN PATENT APPLICATION

(12)

(21) Application number: 88103320.3

(22) Date of filing: 04.03.88

(51) Int. Cl.⁴: **B29C 45/16** , A43B 13/12

(30) Priority: 06.03.87 IT 4154287

(43) Date of publication of application:
14.09.88 Bulletin 88/37

(84) Designated Contracting States:
DE ES FR IT

(71) Applicant: MAIN GROUP S.p.A.
Piazzetta Sartori 17
I-35137 Padova(IT)

(72) Inventor: Ferniani, Aldo
Via Miani 29
I-35100 Padova(IT)

(74) Representative: Modiano, Guido et al
MODIANO, JOSIF, PISANTY & STAUB
Modiano & Associati Via Meravigli, 16
I-20123 Milan(IT)

(54) Process for manufacturing soles for footwear in one or more colours and/or components by injection of plastic material, and apparatus for carrying out the process.

(57) The process consists of a succession of operative steps executed by an apparatus comprising at least one pair of vertical presses arranged side by side which perform successive injections of thermoplastic products in molds, at least a part whereof moves from one press to the other carrying the semiworked item until a finished item in multiple colours and/or materials is obtained. The machines used are of the static type and the movement of the various semiworked items occurs by lateral translatory motion of a carriage, while said machines may also be used individually independently from one another.

Fig.1

EP 0 281 952 A2

# PROCESS FOR MANUFACTURING SOLES FOR FOOTWEAR IN ONE OR MORE COLOURS AND/OR COMPONENTS BY INJECTION OF PLASTIC MATERIAL, AND APPARATUS FOR CARRYING OUT THE PROCESS

The present invention relates to a process for manufacturing soles for footwear in one or more colours and/or components, by injection of plastic material, and to an apparatus for carrying out the abovesaid process.

Processes are currently known for manufacturing technical items, and in particular soles for footwear in multiple colours and/or materials, consisting of preparing semiworked items, with various types of apparata, which are stored to be later assembled in successive steps.

This method is obviously long, expensive, scarcely practical and requires numerous personnel since it cannot be automated.

Very expensive and complicated apparata are also known which use multiple-motor injection machines which operate on multiple molds where they perform successive workings in an automatic and repetitive sequence.

Such apparata have great productivity and are economical only when they always manufacture the same items in large quantities, but are scarcely flexible and are not suitable for a frequent change of production.

The aim of the present invention is to provide a process for manufacturing technical items and in particular of soles for footwear which is very economical, convenient and flexible.

A consequent primary object is to provide a process which may be carried out by machines of an ordinary type, modified and combined so as to be able to perform a complicated process without excessive modifications, so as to be also usable as individual machines.

Still another object is to provide an apparatus which allows to combine together a plurality of machines so as to automate the production and minimize personnel.

Not least object is to achieve an apparatus and a process which allow to obtain high-quality soles with the possibility of regions in different colour and/or material.

The proposed aims are achieved by a process for manufacturing soles for footwear in one or more colours and/or materials, by injection of plastic material, characterized in that it comprises the following steps:

a) preparing a first part of sole, by injection, in a first mold under a first injection press;

b) opening, after cooling, said first mold conveniently containing the tread sole, and displacing a part thereof, supporting the tread sole, into a second injection press to cooperate with said second mold parts;

c) closing said second mold thus obtained, and injecting a second colour and/or material;

d) opening said second mold, extracting the obtained item and eliminating the feedhead; and apparatus for carrying out said process, characterized in that it comprises at least one pair of static presses arranged side by side and connected by a carriage actuated by a piston which allows to move, mold parts from one press to the other, by translatory motion.

To obtain high-yield workings, it is convenient that the static presses be three in number, arranged mutually side by side, the central press being provided with a mold-holder rotatable through 90° simultaneously bearing two half-molds so that one thereof operates with one of the two flanking presses and the second operates with the other flanking press.

Further characteristics and advantages of the invention will become apparent from the detailed description of the apparata and of the process which relates thereto, illustrated only by way of non-limitative example in the accompanying drawings, wherein:

figure 1 is a front view of an assembly composed of three static presses arranged side by side;

figure 2 is a lateral view of the central press illustrating the double rotatable mold-holder;

figure 3 is a plan view of the apparatus used for the translatory motion of mold parts;

figure 4 is a schematic view of the elements which compose the set of molds provided in the presses, their possible movements and the movement means illustrated in the initial step of the process;

figure 5 is a view of the same elements of figure 4 illustrated in the first process step;

figure 6 is a view of the elements of figure 4 illustrated in a second process step;

figure 7 is a view of the elements of figure 4 illustrated in a third process step;

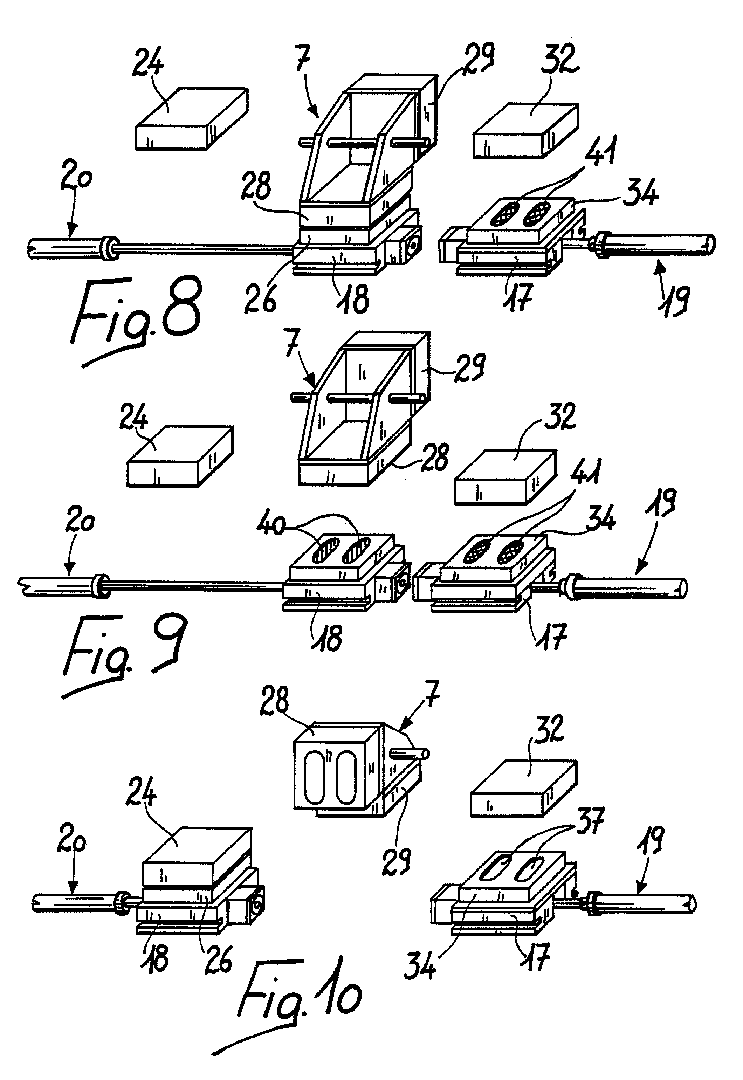

figure 8 is a view of the elements of figure 4 illustrated in a fourth process step;

figure 9 is a view of the elements of figure 4 illustrated in a fifth process step;

figure 10 is a view of the elements of figure 4 illustrated in a sixth process step.

With reference to the above cited figures, an apparatus composed of three substantially identical presses of the static type, indicated respectively by the reference numerals 1, 2 and 3, and mounted on a single base 4, is illustrated.

The presses 1 and 3 have a lower moving mold-holder respectively 5 and 6 while the central press 2 is provided with a rotating and moving mold-holder 7.

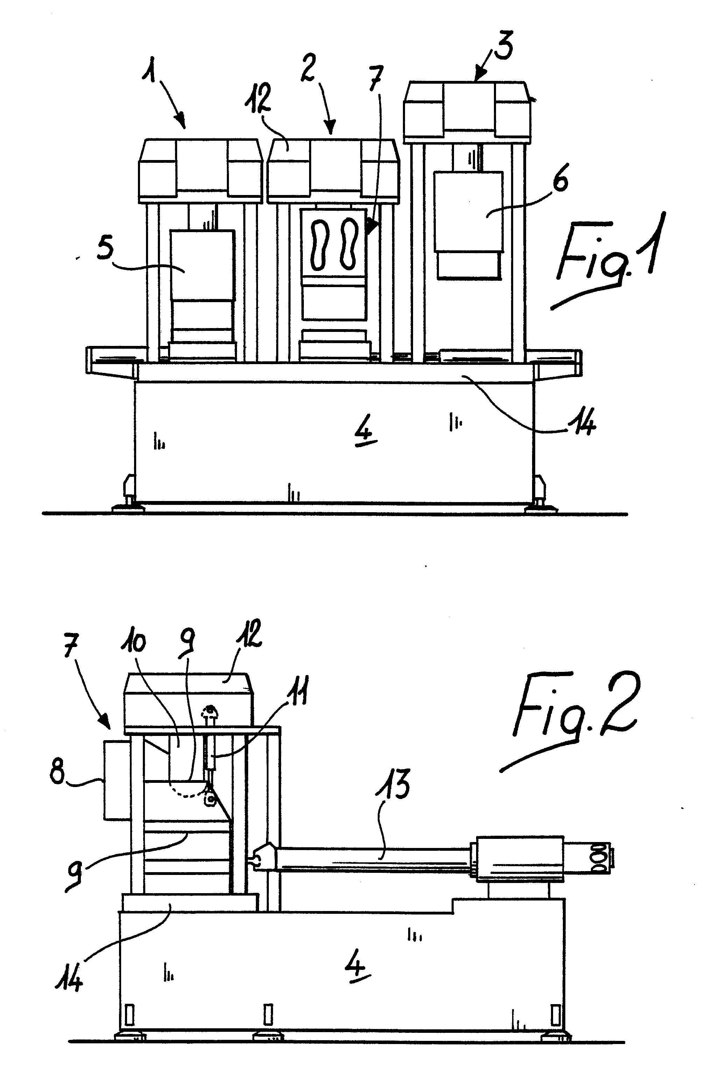

This mold-holder, as more clearly illustrated in figure 2, has two faces respectively 8 and 9 mutually angularly offset by 90° with which are associated the mold parts required for the workings which will be illustrated hereinafter.

Said rotating mold-holder 7 is pivoted at the point 9 to the structure 10 of the press which moves under the action of a piston or of a toggle, not shown.

The 90° rotation of the mold-holder 7 occurs by means of a piston 11 connected on one side to the upper head 12 of the press and on the other to the mold-holder 7.

Each press is provided with an injector of plastic material such as the one indicated at 13 in figure 2 and related to the press 2.

The base 4 has a large plate 14, common to all three presses, on which two longitudinal rails 15 and 16 are provided on which there slide two carriages, respectively 17 and 18, each adapted to support a mold part, as will become apparent.

The translatory motion of the carriages 17 and 18 occurs by means of two pistons 19 and 20.

The rod 21 of the piston 19 is associated with the carriage 17, while the piston body 22 of the piston 19 is associated with the large plate 14.

In a similar manner, the rod 23 of the piston 20 is associated with the carriage 18 while the body of the piston 20 is also associated with the large plate 14.

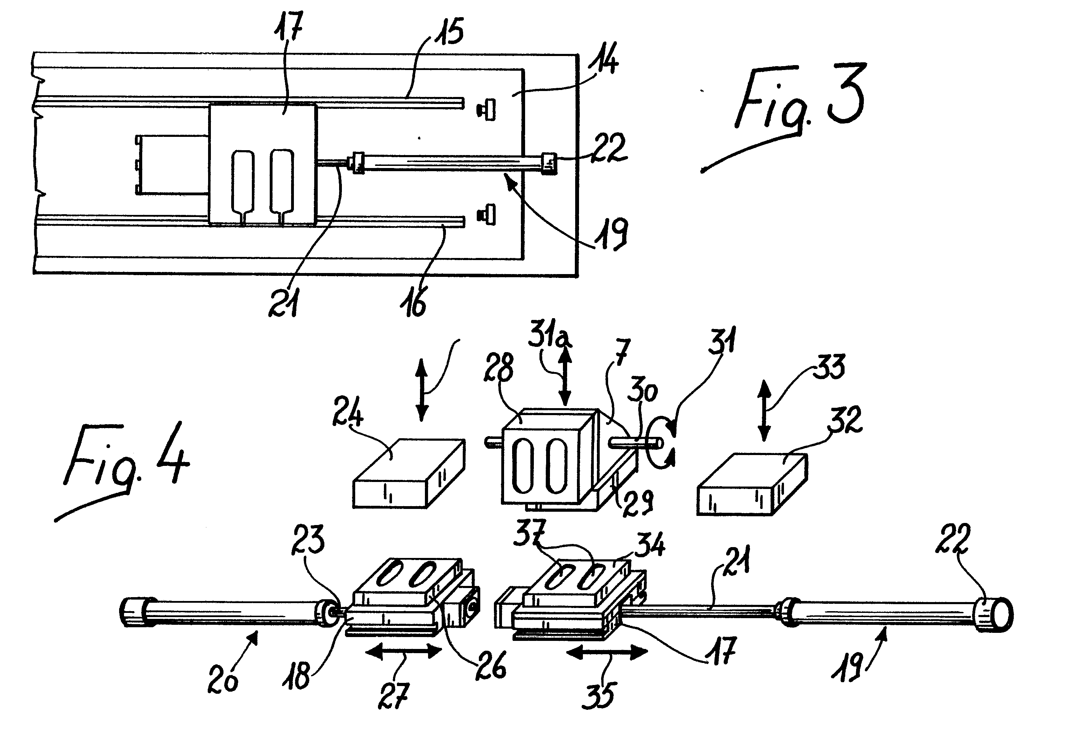

Figure 4 illustrates the various essential elements of all the molds of the three presses, indicating with arrows the possible movements thereof.

Thus, with regard to the first press, an upper half-mold 24 is provided, having a vertical translatory motion according to the arrow 25.

This upper half-mold 24 cooperates with a lower half-mold 26 mounted on the carriage 18 which moves horizontally according to the arrow 27.

In the central press 2 there is the moving and rotating mold-holder 7 which bears two half-molds respectively indicated at 28 and 29 which can rotate through 90° about the pivot 30 according to the arrow 31 and move vertically according to the arrow 31a.

In the press 3 there is an upper half-mold 32 which can move according to the arrow 33 while below there is a lower half-mold 34 mounted on the carriage 17 and moving horizontally according to the arrow 35.

With this arrangement, as will be described hereafter, the directly mutually cooperating mold parts are 24, 26 and 28 with reference to a working which occurs between the presses 1 and 2, and 29, 32 and 34 with reference to an operation which occurs between the presses 2 and 3.

In the startup step, which precedes the beginning of the workings, the upper half-mold 24 of the press 1 is raised and superimposed on the lower half-mold 26.

In the central press the mold-holder is raised and arranged so that the half-mold 29 is arranged facing and superimposed on the lower half-mold 34 which is arranged in the central press.

In the press 3 the upper half-mold 32 is raised and there is no half-mold below it.

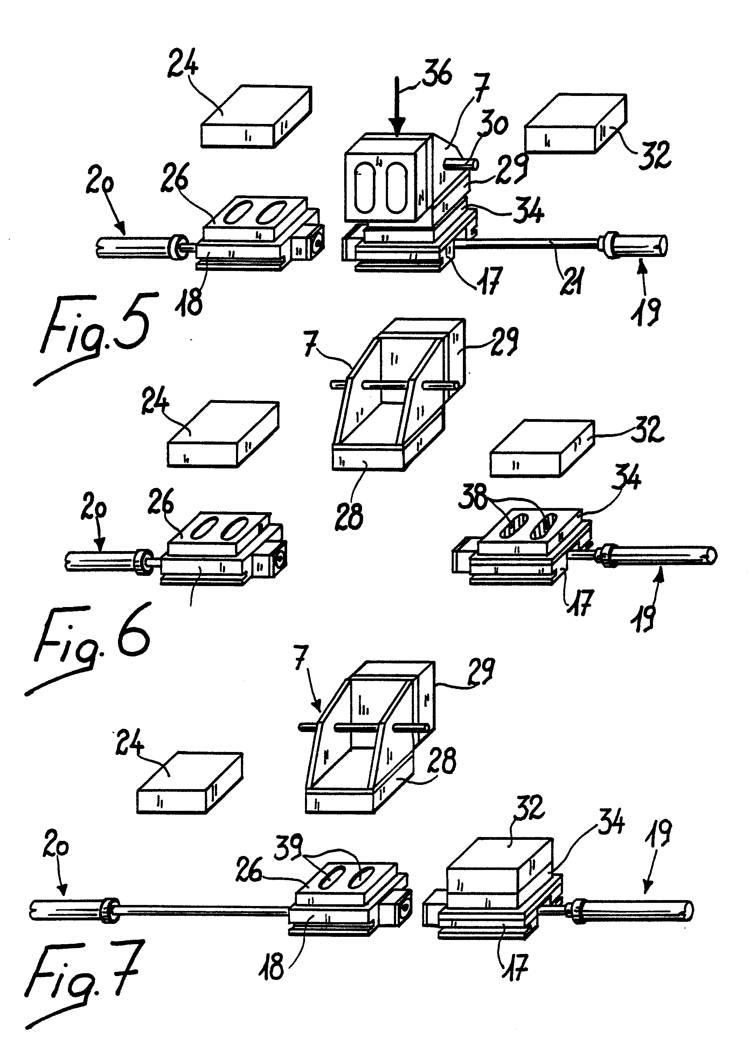

In the first working step, illustrated in figure 5, the lowering of the mold-holder 7 occurs according to the arrow 36 so that the half-molds 29 and 34 join matchingly, allowing a first injection operation to produce for example a tread sole on a first pair of impressions 37 provided on the half-mold 34.

After this first operation, and after a convenient cooling period, the mold-holder 7 is raised, as can be seen in figure 6, and the carriage 17 moves, arranging itself below the press 2 carrying the mold-holder 34 now containing two tread soles 38.

The mold-holder 7, besides raising, also rotates through 90° so as to move the half-mold 28 to a horizontal position.

After this step, as illustrated in figure 7, the press 3 closes the upper mold-holder 32 on the lower half-mold 34 to perform the second injection operation which allows the obtainment of a sole in two colours or in two different materials.

Simultaneously, the piston 20 pushes the carriage 18 in the central press 2 so that the lower half-mold 26 on which two impressions 39 are present, positions itself below the half-mold 28.

After this operation, the half-mold 28 is lowered on the half-mold 26 and then an operation of plastics injection is performed to obtain, for example, a second pair of tread soles, indicated at 40 in figure 9.

In the same step the raising in the press 3 of the half-mold 32, in which two finished soles 41 are contained conveniently occurs.

In the subsequent step, illustrated in figure 9, the raising of the mold-holder of the press 2 occurs, allowing thereby the start of the translatory motion of the carriage 18.

In this step, after a cooling period, the soles 41 are extracted from the half-mold 34 which is also freed from the feedhead.

In the subsequent step, illustrated in figure 10, the lower half-mold 26 mounted on the carriage 18 is moved into the press 1 which lowers thereon the upper half-mold 24, a further injection operation for the completion of the soles related to the half-molds 24 and 26 being thus executable.

Simultaneously, the rotating mold-holder 7, which is raised, rotates through 90°, returning to the position of figure 4.

Subsequently the opening of the half-mold 24 in the press 1 occurs by raising, it being thus possible to extract the finished soles while at the same time the carriage 17 returns to the central position below the press 2, thus restoring the positions indicated in figure 4 which allow the resumption of the working cycle.

From what has been described it can be seen that the use of three presses side by side, a central one whereof is provided with a rotating and moving mold-holder head, allows to alternately execute operations which make mold parts of the press 1 cooperate with the central press 2 and mold parts of the central press 2 cooperate with the lateral press 3.

This allows to obtain in a continuous and alternating manner finished products on the press 1 and on the press 3, products which may even be of different types.

The central press 2 may also be provided with a double injector so as to be able to operate with different materials when it cooperates with mold parts intended for the press 1 respectively and when it cooperates with mold parts related to the press 3.

It is thus possible to obtain not only two product types differing in shape, but also products in different colours or combinations of colours.

The machine may be served by a single operator and its yield is considerable since there is no idle time or waiting time for the operator.

By again using three presses arranged side by side but eliminating one of the two carriages and making the other move below all three presses, it is possible to execute different successive workings for the obtainment of a product in three colours or materials.

In this case it is not necessary that the central press have a rotating mold-holder head.

The three injection operations occur in phases successive to one another, and thereafter the carriage returns to the first press, resuming the cycle.

This second working possibility may occur simply by disassembling one of the two carriages without carrying out any other modifications of the assembly of the machines.

As another operative solution, the three machines may operate individually as three single-colour machines, each served by an operator.

In this case it is sufficient to merely replace, on the rails, fixed mold-holders.

If then each of the three presses is provided with an upper rotating mold-holder and with a second injector, three independent machines capable of producing two-colour products may be obtained.

The three colours may also be obtained by providing all three presses with upper rotating heads and by processing a first colour in the press 1, moving to obtain the second colour in the central press 2 and returning to obtain the third colour on the press 1 after rotating its upper head.

Simultaneously it is possible to obtain a three-colour item by working on the central press 2 and on the lateral press 3, also provided with an upper rotating head.

With this arrangement a high yield of items in three colours or three materials is obtainable.

From what has been described and illustrated it is apparent that the provided process allows to achieve an extreme flexibility in workings, a single operator being capable of serving the three presses and these latter being able, without particular modifications but merely with simple replacements of parts, according to the requirements, to produce different types of soles in one or more colours.

The change in working is also particularly simple and does not entail long machine stop times of the machine.

The apparatus is therefore particularly convenient in cases in which high numbers of identical items to be produced do not occur but it is instead necessary to often change the type of product.

The process and the apparatus are however also particularly convenient when it is not desired to heavily invest in machines capable of performing only individual workings.

The process and the apparatus are therefore extremely suitable for small manufacturers for whom it would be neither possible nor convenient to purchase large machines for specific workings.

Naturally, as mentioned, it is also possible to have only two machines side by side which allow therefore, though the same process concept is maintained, non-simultaneous workings of multiple products in multiple colours or materials.

Naturally, starting from the same concept, suitable componentry may be chosen by selecting for example more convenient press types according to the materials to be processed.

## Claims

1. Process for manufacturing soles for footwear in one or more colours, by injection of plastic material, characterized in that it comprises the following steps:

a) preparing a first sole part, by injection, in a first mold under a first injection press;

b) opening, after cooling, said first mold preferably containing a tread sole and displacing a part thereof, supporting said tread sole, into a second injection press to cooperate with a second mold part;

c) closing said second mold thus obtained, and injecting a second colour and/or material;

d) opening said second mold, extracting the obtained item and eliminating the feedhead;

and apparatus for carrying out said process, characterized in that it comprises at least one pair of static presses arranged side by side and connected by at least one carriage actuated by a piston which allows to move mold parts from one press to the other, by translatory motion.

2. Apparatus for carrying out the process according to claim 1, characterized in that it is composed of three static presses arranged side by side, a central one whereof with head rotatable through 90°, bearing two upper half-molds.

3. Apparatus according to claim 1 for carrying out the process, characterized in that said three static presses are connected by a single large plate in the region of the lower mold-holders, on said large plate there being mounted a pair of rails on which two carriages move and bear the lower half-molds.

4. Apparatus according to claims 1 and 3, characterized in that each of said two carriages is actuated by a piston which determines its translatory motion.

5. Process according to claim 1, characterized in that with three presses, a central one whereof with rotating head which alternately cooperates with one of the two lateral presses, there are obtained products in two identical or different colours for each of the lateral presses with sequences of two successive injections and a translatory carriage motion.

6. Process according to claim 1, characterized in that with three identical presses with non-rotating heads and a single carriage moving successively below all three presses, there is obtained a single product in three colours and/or materials.

7. Process according to claim 1, characterized in that with three presses, all three with rotating heads, and two carriages, two products in three colours and/or materials are obtained.

8. Process according to claim 1, characterized in that with three presses side by side, no carriage and half-molds fixed on the large plate, independent operations with three products in one or more colours are obtained.

Fig.1

Fig.2

Fig. 3

Fig. 4

Fig.5

Fig.6

Fig.7

**Fig. 8**

24  7  29  32

20  28  41  34

26  18  17  19

**Fig. 9**

7  29

24  32

20  40  41  34  19

18  17

**Fig. 10**

28  7

24  32

20  37  19

18  26  29

34  17